# EUROPÄISCHE PATENTANMELDUNG

(11) **EP 0 546 450 A1**
(43) Veröffentlichungstag der Anmeldung: **16.06.1993**
(21) Anmeldenummer: 92120655.3
(22) Anmeldetag: 03.12.1992
(51) Int. Cl.: B60R 22/46, B60R 22/34

(54) **Gurtaufroller für Sicherheitsgurte in Kraftfahrzeugen**

(30) Priorität: 10.12.1991 DE 9115316 U
(71) Anmelder: TRW REPA GMBH, D-73553 Alfdorf (DE)
(72) Erfinder: Mödinger, Thomas, W-7077 Aldorf-Vordersteinenberg (DE); Stütz, Michael, W-7071 Spraitbach (DE)
(74) Vertreter: Degwert, Hartmut, Dipl.-Phys.

(57) **Zusammenfassung**

Bei einem Gurtaufroller für Sicherheitsgurte in Kraftfahrzeugen ist ein Gurtstraffer mit pyrotechnischem Antrieb (11) vorgesehen. Er ist über einen Sensor (10) mittels eines elektrischen Zünders auslösbar. Die Gurtspule (2) ist mit dem Rotor und das Gehäuse des Gurtaufrollers mit dem Stator eines Stromerzeugers (3 bis 7) gekoppelt, dessen Anschlüsse mit einem Stromsammler (9) verbunden sind. Da der Gurtaufroller somit über eine autonome Stromquelle verfügt, entfällt der sonst erforderliche Aufwand für die Verkabelung.

## Beschreibung

Die Erfindung betrifft einen Gurtaufroller für Sicherheitsgurte in Fahrzeugen, mit einer Gurtspule und einem Gurtstraffer, dessen pyrotechnischer Antrieb über einen elektrischen Zünder mittels eines Sensors auslösbar ist.

Der Sensor ist bei mit derartigen Gurtaufrollern ausgestatteten Fahrzeugen im allgemeinen zentral angeordnet. Zu jedem Gurtaufroller führt eine vom Sensor ausgehende elektrische Leitung. Der für die Leitungen und ihre Verlegung im Fahrzeug entstehende Aufwand ist beträchtlich. Nun werden aber in Kraftfahrzeugen verschiedene mechanische Vorgänge durch die Muskelkraft der Insassen ausgeführt, wobei oft die aufgewendete Energie größer ist als der Vorgang benötigt. Die überschüssige Energie wird nutzlos vertan. Ein solcher Vorgang ist das Auf- und Abrollen der Gurtbänder von Sicherheitsgurten.

Der Erfindung liegt die Aufgabe zugrunde, diesen bisher nicht genutzten Überschuß mechanischer Energie nutzbringend zu verwerten und aufwendige elektrische Leitungen zu vermeiden. Die Erfindung geht hierzu aus von einem herkömmlichen Gurtaufroller der oben angegebenen Art und besteht zur Lösung dieser Aufgabe darin, daß die Gurtspule mit dem Rotor und das Gehäuse des Gurtaufrollers mit dem Stator eines Stromerzeugers gekoppelt ist, dessen Anschlüsse mit einem Stromsammler verbunden sind.

Damit kann eine bisher nicht genutzte Energie nutzbringend zur elektrischen Auslösung des pyrotechnischen Antriebs des Gurtstraffers verwertet werden. Die mechanische Energie wird am Ort ihrer Entstehung ausgenutzt, gespeichert und in unmittelbarer Nähe verwendet. Es werden keine langen Kabel benötigt, und die Gesamtanordnung ist einfach, kostensparend und benötigt wenig Platz.

Nach der Herstellung und vor der Inbetriebnahme des erfindungsgemäß ausgestatteten Gurtaufrollers wird vorzugsweise der Stromsammler mit einer Anfangsladung versehen, die für die sichere Auslösung des elektrischen Zünders ausreicht. Der Stromerzeuger muß dann nur noch die zeitbedingten Ladungsverluste am Stromsammler ausgleichen und kann daher so schwach dimensioniert werden, daß die Leichtgängigkeit der Gurtspule nicht merklich beeinträchtigt wird.

Mit der Ausgestaltung des Stromerzeugers nach Anspruch 2 bis 5 wird die einfache, platzsparende und kostengünstige Anordnung weiter gefördert. Wenn nach Anspruch 6 der Stromsammler zwischen dem Stromerzeuger und dem Zünder des pyrotechnischen Antriebs angeordnet wird, werden nur kurze Zuleitungen benötigt. Der Stromsammler, der nach Anspruch 8 bzw. 9 ein Akkumulator oder ein Kondensator sein kann, sammelt die anfallenden kleinen Energiemengen und stellt sie im Bedarfsfall in ausreichender Größe zum Auslösen des pyrotechnischen Antriebs zur Verfügung.

Ein weiterer wesentlicher Vorteil wird erzielt, wenn nach Anspruch 7 ein mechanischer Sensor verwendet wird, der unmittelbar an dem Gurtaufroller angeordnet ist, denn dann bildet dieser mit dem Gurtstraffer eine autonome Baugruppe.

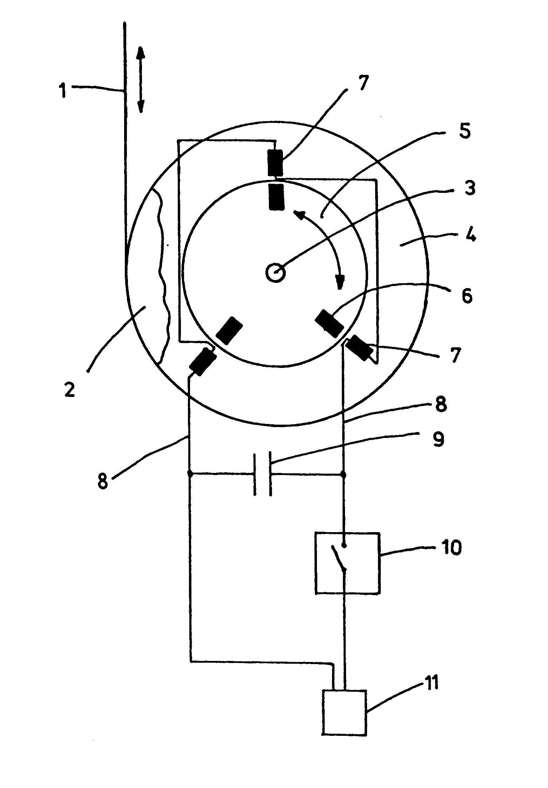

In der einzigen Figur der Zeichnung ist schematisch ein Ausführungsbeispiel der Erfindung dargestellt und wird im folgenden beschrieben.

In dieser Figur ist ein Gurtband 1 gezeigt, das auf einer Gurtspule 2 eines Gurtaufrollers auf- und von dieser abgewikkelt wird. Auf der Welle 3 der Gurtspule 2 ist mit dieser fest verbunden eine Scheibe 5 angebracht, die den Rotor eines Stromerzeugers darstellt. Sie trägt mehrere sternförmig angeordnete Permanentmagnete 6. Dazu ist gleichachsig eine Scheibe, vorzugsweise Ringscheibe 4 angeordnet, die in der Figur die Gurtspule 2 verdeckt. Die Scheibe 4 ist mit dem Stator des Stromerzeugers verbunden und trägt mehrere, z.B. drei sternförmig angeordnete Spulen 7, die über Leitungen 8 zunächst mit einem Stromsammler 9, z.B. einem Akkumulator oder einem Kondensator, verbunden sind. Die Leitungen gehen weiter von dem Stromsammler 9 zu dem pyrotechnischen Antrieb 11 des Gurtstraffers. In eine der Leitungen 8 zum Zünder 11 eines pyrotechnischen Antriebs ist ein Sensor 10 eingeschaltet, der vorzugsweise ein mechanischer Sensor und unmittelbar am Gurtaufroller angebracht ist.

Beim Auf- und Abrollen des Gurtbandes 1 wird die Gurtspule 2 gedreht und damit über deren Welle 3 der Rotor 5. Im Zusammenwirken der Magnete 6 und der Spulen 7 wird mechanische Energie in elektrischen Strom umgewandelt. Dessen kleine Beträge werden in dem Stromsammler 9 gesammelt, und so steht bei einem Ansprechen des Sensors 10 eine ausreichende Energiemenge zur Zündung des pyrotechnischen Antriebs zur Verfügung. Dabei ist die gesamte Vorrichtung durch Konzentration am Ort des Gurtaufrollers sehr einfach und kostengünstig und braucht wenig Platz. Ist der Sensor 10 ein mechanischer Sensor, kann auf jede Verbindung zu einer Zentralsteuerung verzichtet werden, wodurch erhebliche Leitungslängen eingespart werden. Dabei ist aber die zuverlässige Funktion des pyrotechnischen Antriebs und damit des Gurtstraffers gesichert.

## Patentansprüche

1. Gurtaufroller für Sicherheitsgurte in Kraftfahrzeugen, mit einer Gurtspule (2) und einem Gurtstraffer, dessen pyrotechnischer Antrieb (11) über einen Sensor (10) mittels eines elektrischen Zünders auslösbar ist, dadurch gekennzeichnet, daß die Gurtspule (2) mit dem Rotor und das Gehäuse des Gurtaufrollers mit dem Stator eines Stromerzeugers (3 bis 7) gekoppelt ist, dessen Anschlüsse mit einem Stromsammler (9) verbunden sind.

2. Gurtaufroller nach Anspruch 1, dadurch gekennzeichnet, daß der Rotor (5) des Stromerzeugers mit der Welle (3) der Gurtspule (2) fest verbunden ist.

3. Gurtaufroller nach Anspruch 2, dadurch gekennzeichnet, daß der Rotor die Form einer flachen Scheibe (5) hat, auf der sternförmig mehrere Magnete (6) angeordnet sind.

4. Gurtaufroller nach Anspruch 3, gekennzeichnet durch Permanentmagnete (6).

5. Gurtaufroller nach Anspruch 2, 3 oder 4, dadurch gekennzeichnet, daß der Stator des Stromerzeugers eine flache Scheibe (4), insbesondere Ringscheibe, mit gleichachsiger Anordnung zum Rotor (5) ist, auf der sternförmig mehrere Spulen (7) angeordnet sind.

6. Gurtaufroller nach einem der Ansprüche 1 bis 5, gekennzeichnet durch Leitungen (8) vom Stromerzeuger (3 bis 7) zu dem zwischen diesem und dem pyrotechnischen Antrieb (11) angeordneten Stromsammler (9) und weiter zu dem Zünder des pyrotechnischen Antriebs (11), wobei in einer der Leitungen (8) zwischen Stromsammler (9) und pyrotechnischem Antrieb (11) der Sensor (10) angeordnet ist.

7. Gurtaufroller nach Anspruch 6, gekennzeichnet durch einen mechanischen oder elektromechanischen Sensor (10), der unmittelbar am Gurtaufroller angeordnet ist.

8. Gurtaufroller nach Anspruch 6 oder 7, dadurch gekennzeichnet, daß der Stromsammler (9) ein Akkumulator ist.

9. Gurtaufroller nach Anspruch 6 oder 7, dadurch gekennzeichnet, daß der Stromsammler (9) ein Kondensator ist.

10. Gurtaufroller nach einem der vorstehenden Ansprüche, dadurch gekennzeichnet, daß der Stromerzeuger (3 bis 7) für den Ausgleich der zeitbedingten Ladungsverluste am Stromsammler (9) dimensioniert ist.
